# EUROPEAN PATENT SPECIFICATION

(11) **EP 1 655 735 B1**
(45) Date of publication and mention of the grant of the patent: **23.04.2014**
(21) Application number: 05024017.5
(22) Date of filing: 03.11.2005
(51) Int. Cl.: G11B 27/10

(54) **Disc-reproducing device and reproducing method thereof**
Plattenwiedergabegerät und Wiedergabeverfahren dafür
Dispositif de reproduction de disques et procède de reproduction associes

(30) Priority: 04.11.2004 JP 2004320911
(43) Date of publication of application: 10.05.2006
(73) Proprietor: Funai Electric Co., Ltd., Daito-shi, Osaka (JP)
(72) Inventor: Suzuki, Takuya, Daito-shi Osaka (JP)
(74) Representative: Grünecker, Kinkeldey, Stockmair & Schwanhäusser

(56) References cited:
- EP-A- 0 896 335
- EP-A- 1 394 793
- US-A1- 2002 052 732
- PATENT ABSTRACTS OF JAPAN vol. 2000, no. 15, 6 April 2001 (2001-04-06) & JP 2000 335320 A (MATSUSHITA ELECTRIC IND CO LTD), 5 December 2000 (2000-12-05)

## Description

### BACKGROUND OF THE INVENTION

### 1. Field of the Invention

The present invention relates to a disc-reproducing device and a reproducing method thereof for reproducing video signals and audio signals recorded in a DVD (Digital Versatile Disc)-Audio disc, and more particularly, to a disc-reproducing device and a reproducing method thereof for reproducing audio signals recorded in a DVD-Audio disc exclusively without reproducing video signals thereof.

### 2. Description of the Related Art

In general, a DVD-Audio disc is classified into a device for reproducing both video signals and audio signals and a device for reproducing only audio signals. Control information for reproducing both video signals and audio signals or audio signals alone is recorded in the DVD-Audio disc. However, when image data recorded in the DVD-Audio disc is reproduced, an output signal of a video signal can interfere with an audio signal, thereby the quality of the audio signals deteriorates. For this reason, when both video signals and audio signals recorded in the DVD-Audio disc are reproduced by a device for reproducing video signals, the video signals to be reproduced with the audio signals at the same time interferes with the audio signals, and thus the audio signals cannot be reproduced with a high quality.

There has been proposed a related art that reproduce reproducing data capable of reproducing video signals if the video signals can be output and reproduce reproducing data capable of reproducing audio signals only if the video signals cannot be output when the DVD-Audio disc is reproduced (for example, see JP-A-2004-022023).

In addition, there has been proposed a related art, in which display timing modes and display order modes are prepared as the contents of display forms of an audio still image video, and an audio title set includes program chain information to manage the reproduction order of its recording contents, thereby the program chain information includes search pointers regarding reproduction information of the still image, and the search pointer information is constituted so as to include search pointers about the reproduction information (for example, see JP-A-2002-288942).

The former related art reproduces reproducing data capable of reproducing video signals if the video signals can be output and reproduce reproducing data capable of reproducing audio signals only if the video signals cannot be output when the DVD-Audio disc is reproduced. However, the related art cannot output video signals while a vehicle is running, while the related art can output video signals when a vehicle stops, and there is no device capable of solving the above problems.

Also, in the latter related art, display timing modes and display order modes indicating the display forms of an audio still image video are prepared, and program chain information that manages the reproduction order of the recording contents is input to an audio title set. And then, search pointers regarding the reproduction information of the still image is input to the program chain information, and the search pointer regarding the reproducing information is input to the search pointer information, thereby the device can multiple-transfer audio data and still image data with no sound interruption. That is, the related art is not a device capable of solving the problems.

JP 2000-335320 A shows an on-vehicle optical-disk reproducing device including a vehicle condition monitoring means and a search table selecting means. When the vehicle condition monitoring means judges that the vehicle is traveling, the search table selecting means reproduces the optical-disk by referring to a first search table which prohibits the reproduction of images on a TV monitor and permits only the reproduction voice; and when the vehicle condition monitoring means judges that the vehicle is stopped, the search table selecting means reproduces the optical-disk by referring to a second search table which permits the reproduction of both image and voice.

EP 0 896 335 A discloses an optical disk including a data region and a management region. The data region stores first audio data obtained by expressing audio information in accordance with first audio attributes and second audio data obtained by expressing the audio information in accordance with second audio attributes which are different from the first audio attributes, and the management region stores management information for enabling selective reproduction of one of the first audio data and the second audio data.

### SUMMARY OF THE INVENTION

The invention has been finalized in view of the drawbacks inherent in the related art, and it is an object of the invention to provide a disc-reproducing device which can turn an output of video signals off and reproduce only the audio signals without being interrupted when the device is converted to reproduce only the audio signals while video signals and audio signals recorded in the DVD-Audio disc.

This object is achieved by the features as set forth in the independent claims. Further advantageous embodiments of the present invention are set forth in the dependent claims.

A disc-reproducing device according to a first aspect, is capable of reproducing video signals and audio signals recorded in a DVD-Audio disc, and includes a reading unit that reads an audio title search pointer table and an audio-only title search pointer table recorded in the DVD-Audio disc; a reproducing unit that reproduces video signals and audio signals on the basis of the audio title search pointer table which is read by the reading unit; a searching unit that searches a group number and a track number which include video signals and audio signals which are being reproduced, from an audio title number of the audio-only title search pointer table, when the disc-reproducing device is commanded to convert into the reproduction of the audio signals only while the reproducing unit reproduces video signals and audio signals; an obtaining unit that obtains the group number and the track number which are searched by the searching unit; an updating unit that updates an audio title number, a group number and a track number of title information of the video signals and the audio signals which are being reproduced; and a conversion unit that turns output of video signals off so as to reproduce only the audio signals.

The disc-reproducing device further includes a storage unit that stores system parameter, general parameter and audio still image unit of collected still images of navigation information in order to reproduce video signals.

By these unit, output of video signals are turned off so as to reproduce only the audio signals without being interrupted while the audio signals are being reproduced, when the device is converted to reproduce the audio signals only while video signals and audio signals recorded in the DVD-Audio disc are being reproduced.

According to the disc-reproducing device of the first aspect, an audio title search pointer table and an audio-only title search pointer table recorded in the DVD-Audio disc are read; video signals and audio signals are reproduced on the basis of the read audio title search pointer table; a group number and a track number which include video signals and audio signals which are being reproduced are searched, from an audio title number of the audio-only title search pointer table, when the disc-reproducing device is commanded to convert into the reproduction of the audio signals only while the reproducing unit reproduces video signals and audio signals; the searched group number and track number are obtained; an audio title number, a group number and a track number of title information of the video signals and the audio signals which are being reproduced are updated; system parameter, general parameter and audio still image unit of collected still images of navigation information for reproducing video signals are stored; and output of video signals are turned off so as to reproduce only the audio signals. Therefore, when the device is converted to reproduce the audio signals only while video signals and audio signals recorded in the DVD-Audio disc are being reproduced, it is possible to turn output of video signals off and reproduce only the audio signals without being interrupted while the audio signals are being reproduced. Further, if the reproduction of video signals is added to the audio signals while the audio signals are exclusively reproduced, the video signals can be reproduced together with the audio signals.

According to a second aspect, an audio title search pointer table and an audio-only title search pointer table recorded in the DVD-Audio disc are read; video signals and audio signals are reproduced on the basis of the read audio title search pointer table; a group number and a track number which include video signals and audio signals which are being reproduced are searched, from an audio title number of the audio-only title search pointer table, when the disc-reproducing device is commanded to convert into the reproduction of the audio signals only while the reproducing unit reproduces video signals and audio signals; the searched group number and track number are obtained; an audio title number, a group number and a track number of title information of the video signals and the audio signals which are being reproduced are updated; and output of video signals are turned off so as to reproduce only the audio signals. Therefore, when the reproduction of video signals is added to the audio signals while the audio signals are exclusively reproduced, the video signals can be reproduced together with the audio signals.

According to a third aspect, since system parameter, general parameter and audio still image unit of collected still images of navigation information for reproducing the video signals are stored in order to return to a reproducing state of the audio signals capable of reproducing the video signals, the video signals as well as the audio signals can be reproduced again when the video signals need to be reproduced as well as the audio signals during the reproduction of the audio signals only.

According to a fourth aspect, an audio title search pointer table and an audio-only title search pointer table recorded in the DVD-Audio disc are read; video signals and audio signals are reproduced on the basis of the read audio title search pointer table; a group number and a track number which include video signals and audio signals which are being reproduced are searched, from an audio title number of the audio-only title search pointer table, when the disc-reproducing device is commanded to convert into the reproduction of the audio signals only while video signals and audio signals are being reproduced; a group number and a track number of the video signals and the audio signals which are being reproduced are obtained; an audio title number, a group number and a track number of title information of the video signals and the audio signals which are being reproduced are updated; and output of video signals is turned off so as to convert the reproduction to reproduce only the audio signals. Therefore, when the device is converted to reproduce the audio signals only while video signals and audio signals recorded in the DVD-Audio disc are being reproduced, it is possible to turn output of video signals off and reproduce only the audio signals without being interrupted while the audio signals are being reproduced.

According to a fifth aspect, in order to return to a reproducing state of audio signals in which video signals can be reproduced, an audio still image unit of system parameter, general parameter and audio still image unit of collected still images of navigation information for reproducing video signals is stored. Therefore, when the reproduction of video signals is added to the audio signals while the audio signals are exclusively reproduced, the video signals can be reproduced together with the audio signals.

### BRIEF DESCRIPTION OF THE DRAWINGS

These and other objects and advantages of this invention will become more fully apparent from the following detailed description taken with the accompanying drawings in which:
Fig. 1 is a bloc diagram showing a construction of a disc-reproducing device according to an embodiment of the invention; and
Fig. 2 is a flow chart showing a reproducing operation of the disc-reproducing device according to the embodiment of the invention.

### DETAILED DESCRIPTION OF THE PREFERRED EMBODIMENTS

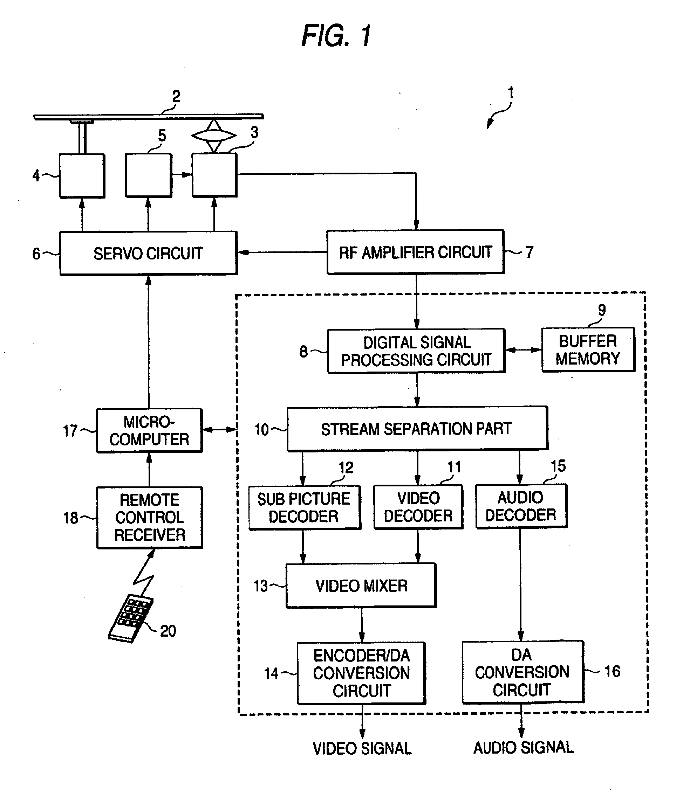

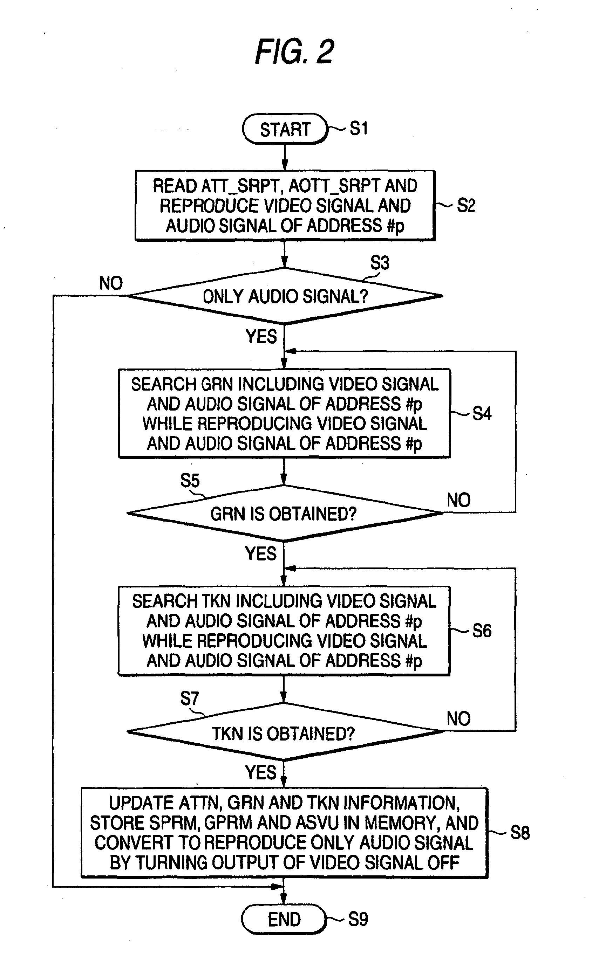

Hereinafter, a preferred embodiment of the invention will be described in detail with reference to the accompanying drawings. Fig. 1 is a bloc diagram showing a construction of a disc-reproducing device according to an embodiment of the invention, and Fig. 2 is a flow chart showing an operation of the disc-reproducing device according to the embodiment of the invention.

First, the preferred embodiment will be described with reference to Fig. 1 that is a bloc diagram showing the construction of the disc-reproducing device according to the embodiment of the invention.

A disc-reproducing device 1 includes an optical pick up 3, a spindle motor 4, a thread motor 5, a servo circuit 6, an RF amplifier circuit 7, a digital signal processing circuit 8, a buffer memory 9, a stream separation part 10, a video decoder 11, a sub picture coder 12, a video mixer 13, an encoder/DA conversion circuit 14, an audio decoder 15, a DA conversion circuit 16, a micro computer 17, and a remote control receiver 18. The optical pick up 3 reads information data recorded in a DVD-Audio disc 2 by irradiating laser light on a recording surface of the DVD-Audio disc 2 and detecting a reflected light from the recording surface. The spindle motor 4 rotates the DVD-Audio disc 2. The thread motor 5 moves the optical pick up 3 in a radial direction of the DVD-Audio disc 2. The servo circuit 6 servo-controls the rotation speed of the DVD-Audio disc 2 by driving the spindle motor 4 and servo-controls the rotation direction and speed of the thread motor 5. In addition, the servo circuit 6 servo-controls the tracking of the optical pick up 3 on the basis of tracking error signals detected by the optical pick up 3 and servo-controls the focus of the optical pick up 3 on the basis of focus error signals detected by the optical pick up 3. The RF amplifier circuit 7 amplifies an RF (Radio Frequency) signal of information data read by the optical pick up 3. The digital signal processing circuit 8 converts information data of analog signals into digital signals by synchronously detecting the RF signal of information data amplified by the RF amplifier circuit 7 on the basis of a reference clock, and then demodulates the information data which has been converted into digital data and corrects errors of the demodulated information data. The buffer memory 9 temporarily stores information data when the digital signal processing circuit 8 processes signals of information data. The stream separation part 10 separates respective bit streams of video signals, sub picture signals, audio signals of information data. Video signals of information, which is compressed by a predetermined compressing method such as MPEG (Moving Picture Expert Group), are expanded and decoded to video signals of the original information data by the video decoder 11. Information data of sub picture signals, such as character information signals, which is compressed by a predetermined compressing method, is expanded and decoded to character information signals of the original information data by the sub picture coder 12. The video mixer 13 mixes the decoded video signals and sub picture signals to an original sequence on the basis of time information recorded in the DVD-Audio disc. The encoder/DA conversion circuit 14 encodes video signals of digital signals mixed by the video mixer 13 to video signals with a predetermined signal system such as NTSC (National Television System Committee) system, and converts the encoded video signals of digital signals into analog signals. Audio signals of information data which are compressed by a predetermined compressing method such as AC-3 (Audio Compression-3, a trade mark of Dolby Laboratories Inc., in America) are expanded and decoded to audio signals of the original digital signal by the audio decoder 15. The DA conversion circuit 16 converts the decoded audio signals of digital signals into analog signals. The micro computer 17 controls the entire system of the disc-reproducing device 1. The remote control receiver 18 receives remote control signals of infrared ray signals received from a remote controller 20 so as to convert the remote control signal into a predetermined signal.

Hereinafter, an operation of the disc-reproducing device having the above construction will be described.

When the device is commanded to reproduce the DVD-Audio disc 2 by operating an operation key of the remote controller 20, the microcomputer 17 transmits a control signal to the servo circuit 16, and then the DVD-Audio disc 2 is rotated by driving the spindle motor 4, and the optical pick up 3 is moved in a radial direction of the DVD-Audio disc 2 by driving the thread motor 5. ATT_SRPT (Audio Title_Search Pointer Table) and AOTT_SRPT (Audio only Title_Search Pointer Table) recorded in the DVD-Audio disc 2 are read, and video signals and audio signals of an address number #p of a track number TKN#o of a group number GRN#n of an audio title number ATS_TTN#m are reproduced on the basis of the read ATT_SRPT.

While audio signals and video signals recorded in the DVD-Audio disc 2 are being reproduced, when the device is commanded to reproduce only the audio signals recorded in the DVD-Audio disc 2, the microcomputer 17 reproduces video signals and audio signals of the address number #p recorded in the DVD-Audio disc 2, searches a GRN (Group Number) #i including the video signals and the audio signals of the address number #P, which is being reproduced, from the audio title number ATTN# of the audio title number ATS_TTN#m of the audio-only title search pointer table AOTT_SRPT information, and obtains the group number GRN#i of the video signals and the audio signals of the address number #p recorded in the DVD-Audio disc 2 which is being reproduced.

When the group number GRN#1 recorded in the DVD-Audio disc 2 is obtained, the microcomputer 17 reproduces the video signals and the audio signals of the address number #p recorded in the DVD-Audio disc 2 and searches the track number TKN (Track Number) #j including the video signals and the audio signals of the address number #p recorded in the DVD-Audio disc, which is being reproduced, from the program number PGN (Program Number) including each audio title ATT (Audio Title) of the group number GRN#i, and obtains the track number TKN#j.

The microcomputer 7 updates the audio title number ATTN, the group number GRN, and the track number TKN of title information of audio signals and video signals and stores system parameter SPRM, general parameter GPRM, and audio still image unit ASVU in a memory (not shown) of the microcomputer 17. In addition, the microcomputer 7 transmits control signals to the encoder/DA conversion circuit 14, turns the output of video signals off, and reproduces the audio signals only without being interrupted while the audio signals are being reproduced.

In addition, the operation of the disc-reproducing device will be described with reference to a flow chart of Fig. 2 showing the operation of the disc-reproducing device according to another embodiment of the present invention.

When the device is commanded to reproduce the DVD-Audio disc, step S1 proceeds to step S2. In step S2, information of the audio title search pointer table ATT_SRPT and the audio-only title search pointer table AOTT_SRPT recorded in the DVD-Audio disc are read, and video signals and audio signals of the address #p of the track number TKN#o of the group number GRN#n of the audio title number ATS_TTN#m are reproduced on the basis of the information of the audio title search pointer table ATT_SRPT, and thus step S2 proceeds to step S3.

In step S3, it is determined whether the device is commanded to convert into the reproduction of only the audio signals. When the device is commanded to convert the reproduction of only the audio signals, step S3 proceeds to step S4. On the other hand, when the device is not commanded to convert the reproduction of only the audio signals, step S3 proceeds to step S9, and the processing is terminated.

In step S4, while video signals and audio signals of the address number #p are reproduced, the group number GRN#i including the video signals and audio signals of the address number #p that is being reproduced from the audio title number ATTN# of the audio title number ATS_TTN#m recorded in the information of the audio-only title search pointer table AOTT_SRPT is searched, and thus step S4 proceeds to step S5.

In step S5, it is determined whether the group number GRN#i including video signals and audio signals recorded in the DVD-Audio disc that are being reproduced is obtained. When the group number GRN#i including the video signals and audio signals recorded in the DVD-Audio disc that are being reproduced is obtained, step S5 proceeds to step S6. On the other hand, when the group number GRN#i including video signals and audio signals recorded in the DVD-Audio disc that are being reproduced is not obtained, step S5 returns to step S4, and the processing is restarted from step S4.

In step S6, video signals and audio signals of the address number #p recorded in the DVD-Audio disc are reproduced, and the track number TKN#j including video signals and audio signals of the address number #p that are being reproduced is searched, thereby step S6 proceeds to step S7.

In step S7, it is determined whether the track number TKN#j including video signals and audio signals recorded in the DVD-Audio disc that are being reproduced is obtained. When the track number TKN#j including the video signals and audio signals recorded in the DVD-Audio disc that are being reproduced is obtained, step S7 proceeds to step S8. On the other hand, when the track number TKN#j including video signals and audio signals recorded in the DVD-Audio disc that are being reproduced is not obtained, step S7 returns to step S6, and the processing is restarted from step S6.

In step S8, the audio title number ATTN, the group number GRN, and the track number TKN are updated; the system parameter SPRM, the general parameter GPRM, and the audio still image video signal unit ASVU are stored in the memory so as to return to VCAP capable of reproducing video signals and audio signals; and output of video signals are turned off so as to reproduce only the audio signals without being interrupted while the audio signals are being reproduced. Thus, step S8 proceeds to step S9, and the processing is terminated.
[FIG. 1]
   - 6:: SERVO CIRCUIT
   - 7:: RF AMPLIFIER CIRCUIT
   - 8:: DIGITAL SIGNAL PROCESSING CIRCUIT
   - 9:: BUFFER MEMORY
   - 10:: STREAM SEPARATION PART
   - 11:: VIDEO DECODER
   - 12:: SUB PICTURE DECODER
   - 13:: VIDEO MIXER
   - 14:: ENCODER/DA CONVERSION CIRCUIT
   - 15:: AUDIO DECODER
   - 16:: DA CONVERSION CIRCUIT
   - 17:: MICROCOMPUTER
   - 18:: REMOTE CONTROL RECEIVER
   - 20:: REMOTE CONTROLLER
   - VIDEO SIGNAL:
   - AUDIO SIGNAL:
[FIG. 2]
   - S1:: START
   - S2:: READ ATT_SRPT, AOTT_SRPT AND REPRODUCE VIDEO SIGNAL AND AUDIO SIGNAL OF ADDRESS #p
   - S3:: ONLY AUDIO SIGNAL?
   - S4:: SEARCH GRN INCLUDING VIDEO SIGNAL AND AUDIO SIGNAL OF ADDRESS #p WHILE REPRODUCING VIDEO SIGNAL AND AUDIO SIGNAL OF ADDRESS #p
   - S5:: IS GRN OBTAINED?
   - S6:: SEARCH TKN INCLUDING VIDEO SIGNAL AND AUDIO SIGNAL OF ADDRESS #p WHILE REPRODUCING VIDEO SIGNAL AND AUDIO SIGNAL OF ADDRESS #p
   - S7:: IS TKN OBTAINED?
   - S8:: UPDATE ATTN, GRN, AND TKN INFORMATION, STORE SPRM, GPRM, AND ASVU IN MEMORY, AND COVERT TO REPRODUCE ONLY AUDIO SIGNAL BY TURNING OUTPUT OF VIDEO SIGNAL OFF
   - S9:: END

## Claims

1. A disc-reproducing device (1) for reproducing video signals and audio signals recorded in a DVD-Audio disc (2), comprising:
a reading unit (3) adapted to read an audio title search pointer table and an audio-only title search pointer table recorded in the DVD-Audio disc;
a reproducing unit (17) adapted to reproduce the video signals and the audio signals of a predetermined address number on the basis of the audio title search pointer table read by the reading unit (3), and to reproduce audio signals of the predetermined address number on the basis of the audio-only title search pointer table read by the reading unit (3); and
a memory (9) adapted to store title information including the audio title number, the group number and the track number of the video signal and/or the audio signal that are/is reproduced by the reproducing unit (17);
**characterized by**
a searching unit (17) adapted to search the group number and the track number of the predetermined address number from the audio-only title search pointer table when the disc-reproducing device (1) is commanded to convert into the reproduction of the audio signals only while the reproducing unit (17) reproduces video signals and audio signals of the predetermined address number;
an obtaining unit (17) adapted to obtain the group number and the track number searched by the searching unit (17);
an updating unit (17) adapted to update the audio title number of the title information stored in the memory (9) with the audio title number of the predetermined address number, and to update the group number and the track number of the title information stored in the memory (9) based on the obtained group number and track number; and
a conversion unit (17) adapted to turn an output of the video signals off, and to reproduce audio signal based on the updated title information.

2. The disc-reproducing device according to claim 1, wherein the reproducing unit (17) does not interrupt the reproduction of audio signals during the conversion from the reproduction of video signals and audio signals to the reproduction of audio signals only.

3. The disc-reproducing device according to claim 1 or 2, further comprising: a storage unit (17) adapted to store a system parameter, a general parameter and an audio still video unit of collected still images of navigation information in order to permit a return to the reproduction of video signals and audio signals.

4. A reproducing method of a disc-reproducing device (1) for reproducing video signals and audio signals recorded in a DVD-Audio disc (2), comprising:
reading (S2) an audio title search pointer table and an audio-only title search pointer table recorded in the DVD-Audio disc;
reproducing video signals and audio signals of a predetermined address number on the basis of the audio title search pointer table, and reproducing audio signals of the predetermined address number on the basis of the audio-only title search pointer table;
storing title information including the audio title number, the group number and the track number of the video signal and/or the audio signal that are/is reproduced;
**characterized by**
searching (S4) the group number and the track number of the predetermined address number from the audio-only title search pointer table when the disc-reproducing device (1) is commanded to convert into the reproduction of the audio signals only while video signals and
audio signals of the predetermined address number are reproduced;
obtaining the group number and the track number searched in the searching step;
updating (S8) the audio title number of the stored title information with the audio title number of the predetermined address number, and updating the group number and the track number of the stored title information based on the obtained group number and track number; and
turning an output of the video signals off, and reproducing audio signals based on the updated title information.

5. The reproducing method of the disc-reproducing device according to claim 4, wherein the reproduction of audio signals is not interrupted during the conversion from the reproduction of video signals and audio signals to the reproduction of audio signals-only.

6. The reproducing method of the disc-reproducing device according to claim 4 or 5, further comprising: storing (S8) a system parameter, a general parameter and an audio still video unit of collected still images of navigation information in order to permit a return to the reproduction of video signals and audio signals.

## Patentansprüche

1. Plattenwiedergabegerät (1) zum Wiedergeben von Videosignalen und Audiosignalen, die auf einer DVD-Audioplatte (2) aufgezeichnet sind, wobei das Plattenwiedergabegerät (1) umfasst:
eine Leseeinheit (3), die ausgebildet ist zum Lesen einer Audiotitel-Suchzeigertabelle und einer nur-Audiotitel-Suchzeigertabelle, die auf der DVD-Audioplatte aufgezeichnet sind,
eine Wiedergabeeinheit (17), die ausgebildet ist zum Wiedergeben von Videosignalen und Audiosignalen einer vorbestimmten Adressnummer auf der Basis der durch die Leseeinheit (3) gelesenen Audiotitel-Suchzeigertabelle und zum Wiedergeben von Audiosignalen der vorbestimmten Adressnummer auf der Basis der durch die Leseeinheit (3) gelesenen nur-Audiotitel-Suchzeigertabelle, und
einen Speicher (9), der ausgebildet ist zum Speichern von Titelinformationen einschließlich der Audiotitelnummer, der Gruppennummer und der Spurnummer des Videosignals und/oder des Audiosignals, das bzw. die durch die Wiedergabeeinheit (17) wiedergegeben wird/werden,
**gekennzeichnet durch**
eine Sucheinheit (17), die ausgebildet ist zum Suchen der Gruppennummer und der Spurnummer der vorbestimmten Adressnummer aus der nur-Audiotitel-Suchzeigertabelle, wenn das Plattenwiedergabegerät (1) angewiesen wird, zu der Wiedergabe nur der Audiosignale zu wechseln, während die Wiedergabeeinheit (17) Videosignale und Audiosignale der vorbestimmten Adressnummer wiedergibt,
eine Erhaltungseinheit (17), die ausgebildet ist zum Erhalten der Gruppennummer und der Spurnummer, die **durch** die Sucheinheit (17) gesucht werden,
eine Aktualisierungseinheit (17), die ausgebildet ist zum Aktualisieren der Audiotitelnummer der in dem Speicher (9) gespeicherten Titelinformationen mit der Audiotitelnummer der vorbestimmten Adressnummer und zum Aktualisieren der Gruppennummer und der Spurnummer der in dem Speicher (9) gespeicherten Titelinformationen auf der Basis der erhaltenen Gruppennummer und Spurnummer, und
eine Wandlungseinheit (17), die ausgebildet ist zum Ausschalten einer Ausgabe der Videosignale und zum Wiedergeben der Audiosignale auf der Basis der aktualisierten Titelinformationen.

2. Plattenwiedergabegerät nach Anspruch 1, wobei die Wiedergabeeinheit (17) die Wiedergabe der Audiosignale nicht unterbricht, während von der Wiedergabe der Videosignale und Audiosignale zu der Wiedergabe nur der Audiosignale gewechselt wird.

3. Plattenwiedergabegerät nach Anspruch 1 oder 2, das weiterhin umfasst: eine Speichereinheit (17), die ausgebildet ist zum Speichern eines Systemparameters, eines allgemeinen Parameters und einer Audio/Standvideo-Einheit von gesammelten Standbildern mit Navigationsinformationen, um eine Rückkehr zu der Wiedergabe der Videosignale und Audiosignale zu gestatten.

4. Wiedergabeverfahren für ein Plattenwiedergabegerät (1) zum Wiedergeben von Videosignalen und Audiosignalen, die auf einer DVD-Audioplatte (2) aufgezeichnet sind, wobei das Wiedergabeverfahren folgende Schritte umfasst:
Lesen (L2) einer Audiotitel-Suchzeigertabelle und einer nur-Audiotitel-Suchzeigertabelle, die auf der DVD-Audioplatte aufgezeichnet sind,
Wiedergeben von Videosignalen und Audiosignalen einer vorbestimmten Adressnummer auf der Basis der Audiotitel-Suchzeigertabelle, und Wiedergeben von Audiosignalen der vorbestimmten Adressnummer auf der Basis der nur-Audiotitel-Suchzeigertabelle, und
Speichern von Titelinformationen einschließlich der Audiotitelnummer, der Gruppennummer und der Spurnummer des Videosignals und/oder des Audiosignals, das bzw. die wiedergegeben wird/werden,
**gekennzeichnet durch**
Suchen (S4) der Gruppennummer und der Spurnummer der vorbestimmten Adressnummer aus der nur-Audiotitel-Suchzeigertabelle, wenn das Plattenwiedergabegerät (1) angewiesen wird, zu der Wiedergabe nur der Audiosignale zu wechseln, während Videosignale und Audiosignale der vorbestimmten Adressnummer wiedergegeben werden,
Erhalten der Gruppennummer und der Spurnummer, die in dem Suchschritt gesucht werden,
Aktualisieren (S8) der Audiotitelnummer der gespeicherten Titelinformationen mit der Audiotitelnummer der vorbestimmten Adressnummer, und Aktualisieren der Gruppennummer und der Spurnummer der gespeicherten Titelinformationen auf der Basis der erhaltenen Gruppennummer und Spurnummer, und
Ausschalten einer Ausgabe der Videosignale, und Wiedergeben der Audiosignale auf der Basis der aktualisierten Titelinformationen.

5. Wiedergabeverfahren für ein Plattenwiedergabegerät nach Anspruch 4, wobei die Wiedergabe der Audiosignale nicht unterbrochen wird, während von der Wiedergabe der Videosignale und Audiosignale zu der Wiedergabe nur der Audiosignale gewechselt wird.

6. Wiedergabeverfahren für ein Plattenwiedergabegerät nach Anspruch 4 oder 5, wobei das Wiedergabeverfahren weiterhin umfasst: Speichern (S8) eines Systemparameters, eines allgemeinen Parameters und einer Audio/Standvideo-Einheit von gesammelten Standbildern mit Navigationsinformationen, um eine Rückkehr zu der Wiedergabe der Videosignale und Audiosignale zu gestatten.

## Revendications

1. Dispositif de reproduction de disque (1) destiné à reproduire des signaux vidéo et des signaux audio enregistrés sur un disque DVD-Audio (2), comprenant :
une unité de lecture (3) adaptée pour lire une table de pointeurs de recherche de titre audio et une table de pointeurs de recherche de titre audio uniquement enregistrées sur le disque DVD-Audio ;
une unité de reproduction (17) adaptée pour reproduire les signaux vidéo et les signaux audio d'un numéro d'adresse prédéterminé sur la base de la table de pointeurs de recherche de titre audio lue par l'unité de lecture (3), et pour reproduire des signaux audio du numéro d'adresse prédéterminé sur la base de la table de pointeurs de recherche de titre audio uniquement lue par l'unité de lecture (3) ; et
une mémoire (9) adaptée pour stocker des informations de titre comprenant le numéro de titre audio, le numéro de groupe et le numéro de piste du signal vidéo et/ou du signal audio qui sont/est reproduit(s) par l'unité de reproduction (17) ;
**caractérisé par**
une unité de recherche (17) adaptée pour rechercher le numéro de groupe et le numéro de piste du numéro d'adresse prédéterminé à partir de la table de pointeurs de recherche de titre audio uniquement lorsque le dispositif de reproduction de disque (1) est commandé pour convertir en la reproduction des signaux audio uniquement pendant que l'unité de reproduction (17) reproduit des signaux vidéo et des signaux audio du numéro d'adresse prédéterminé ;
une unité d'obtention (17) adaptée pour obtenir le numéro de groupe et le numéro de piste recherchés par l'unité de recherche (17) ;
une unité de mise à jour (17) adaptée pour mettre à jour le numéro de titre audio des informations de titre stockées dans la mémoire (9) avec le numéro de titre audio du numéro d'adresse prédéterminé, et pour mettre à jour le numéro de groupe et le numéro de piste des informations de titre stockées dans la mémoire (9) sur la base du numéro de groupe et du numéro de piste obtenus ; et
une unité de conversion (17) adaptée pour mettre une sortie des signaux vidéo hors tension, et pour reproduire des signaux audio sur la base des informations de titre mises à jour.

2. Dispositif de reproduction de disque selon la revendication 1, dans lequel l'unité de reproduction (17) n'interrompt pas la reproduction de signaux audio pendant la conversion de la reproduction de signaux vidéo et de signaux audio à la reproduction de signaux audio uniquement.

3. Dispositif de reproduction de disque selon la revendication 1 ou 2, comprenant en outre : une unité de stockage (17) adaptée pour stocker un paramètre de système, un paramètre général et une unité de vidéo fixe audio d'images fixes collectées d'informations de navigation afin de permettre un retour à la reproduction de signaux vidéo et de signaux audio.

4. Procédé de reproduction d'un dispositif de reproduction de disque (1) destiné à reproduire des signaux vidéo et des signaux audio enregistrés sur un disque DVD-Audio (2), comprenant :
la lecture (S2) d'une table de pointeurs de recherche de titre audio et d'une table de pointeurs de recherche de titre audio uniquement enregistrées sur le disque DVD-Audio ;
la reproduction de signaux vidéo et de signaux audio d'un numéro d'adresse prédéterminé sur la base de la table de pointeurs de recherche de titre audio, et la reproduction de signaux audio du numéro d'adresse prédéterminé sur la base de la table de pointeurs de recherche de titre audio uniquement ;
le stockage d'informations de titre comprenant le numéro de titre audio, le numéro de groupe et le numéro de piste du signal vidéo et/ou du signal audio qui sont/est reproduit(s) ;
**caractérisé par**
la recherche (S4) du numéro de groupe et du numéro de piste du numéro d'adresse prédéterminé à partir de la table de pointeurs de recherche de titre audio uniquement lorsque le dispositif de reproduction de disque (1) est commandé pour convertir en la reproduction des signaux audio uniquement pendant que des signaux vidéo et des signaux audio du numéro d'adresse prédéterminé sont reproduits ;
l'obtention du numéro de groupe et du numéro de piste recherchés à l'étape de recherche ;
la mise à jour (S8) du numéro de titre audio des informations de titre stockées avec le numéro de titre audio du numéro d'adresse prédéterminé, et la mise à jour du numéro de groupe et du numéro de piste des informations de titre stockées sur la base du numéro de groupe et du numéro de piste obtenus ; et
la mise d'une sortie des signaux vidéo hors tension, et la reproduction de signaux audio sur la base des informations de titre mises à jour.

5. Procédé de reproduction du dispositif de reproduction de disque selon la revendication 4, dans lequel la reproduction de signaux audio n'est pas interrompue pendant la conversion de la reproduction de signaux vidéo et de signaux audio à la reproduction de signaux audio uniquement.

6. Procédé de reproduction du dispositif de reproduction de disque selon la revendication 4 ou 5, comprenant en outre :
le stockage (S8) d'un paramètre de système, d'un paramètre général et d'une unité de vidéo fixe audio d'images fixes collectées d'informations de navigation afin de permettre un retour à la reproduction de signaux vidéo et de signaux audio.
